# EUROPÄISCHE PATENTANMELDUNG

(11) **EP 0 839 844 A1**
(43) Veröffentlichungstag der Anmeldung: **06.05.1998**
(21) Anmeldenummer: 97115601.3
(22) Anmeldetag: 09.09.1997
(51) Int. Cl.: C08G 18/10, C08G 18/32, C09D 175/04

(54) **Lackpolyisocyanate mit eingebautem HALS-Stabilisator**

(30) Priorität: 02.11.1996 DE 19645165
(71) Anmelder: HÜLS AKTIENGESELLSCHAFT, 45764 Marl (DE)
(72) Erfinder: Gras, Rainer, Dr., 44879 Bochum (DE); Wolf, Elmar, Dr., 45661 Recklinghausen (DE)

(57) **Zusammenfassung**

Lackpolyisocyanate mit einem eingebauten HALS-Stabilisator, bestehend aus Addukten von aliphatischen, (cyclo)aliphatischen, cycloaliphatischen Diisocyanaten und Polyolen der folgenden Zusammensetzung: 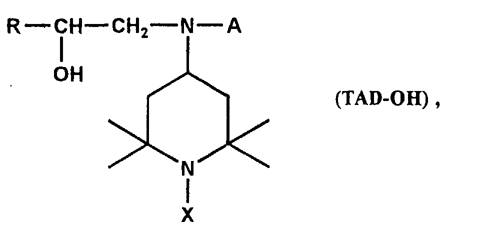 wobei
- A:: H; 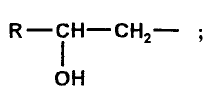
- R:: H, Alkylrest mit 1 - 20 C-Atomen, Cycloalkylrest, substituierter Cycloalkylrest;
- X:: H, CH₃ , 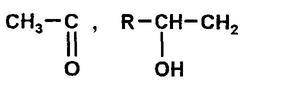
bedeuten, und die pro OH-Äquivalent TAD-OH 2 NCO-Äquivalente Diisocyanat enthalten.

## Beschreibung

Die vorliegende Erfindung betrifft Lackpolyisocyanate mit einem eingebauten HALS-Stabilisator, ein Verfahren zu ihrer Herstellung, deren Verwendung zur Herstellung von 2K-PUR-Lacken und als reaktiver Zusatz zur UV-Stabilisierung von 2K-PUR-Lacken sowie feuchtigkeitshärtenden 1K-PUR-Lacken.

Zweikomponenten-Polyurethanlacke (2K-PUR) haben aufgrund ihrer hervorragenden technologischen Eigenschaften für eine Vielzahl unterschiedlichster Anwendungsgebiete Bedeutung erlangt. Sie ergeben bereits bei Raumtemperaturtrocknung lösemittel- und chemikalienbeständige Beschichtungen mit ausgezeichneten optischen und mechanischen Eigenschaften. Diese 2K-PUR-Lacke müssen gegen Abbau durch Sonneneinstrahlung stabilisiert werden. Als Stabilisatoren werden die bekannten UV-Stabilisatoren auf Benztriazol-Basis (z. B. TINUVIN® 326) bzw. die Radikalfänger auf Basis von stark sterisch gehinderten Aminen (z. B. TINUVIN® 770), bevorzugt eine Kombination von beiden Substanzklassen (synergistische Effekte!), eingesetzt. Nachteilig bei den mit diesen Stabilisatoren stabilisierten 2K-PUR-Lacken ist die nur begrenzte Lebensdauer des Stabilisators, der mit der Zeit an die Oberfläche "auswandert" und da "vernichtet" wird.

Aufgabe der vorliegenden Erfindung war es deshalb, Diisocyanat-Addukte zur Verfügung zu stellen, mit denen man ohne Zusatz eines Stabilisators permanent stabilisierte 2K-PUR-Beschichtungen herstellen kann. Diese Aufgabe konnte durch Bereitstellung von kettenverlängerten Diisocyanataddukten, die als Diisocyanatverknüpfungskomponente folgendes Polyol bzw. folgenden Aminoalkohol (wenn A = H) enthalten: 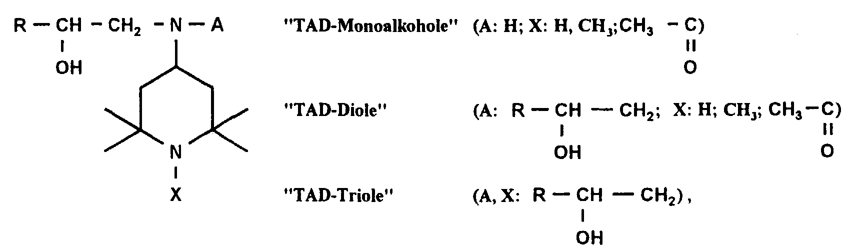 wobei
- A:: H, 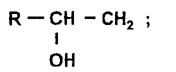
- R:: H, Alkylrest mit 1 - 20 C-Atomen, Cycloalkylrest, substituierter Cycloalkylrest;
- X:: H, CH₃, 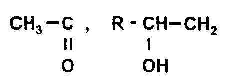
bedeuten, gelöst werden.

Gegenstand der Erfindung sind Lackpolyisocyanate mit einem eingebauten HALS-Stabilisator, bestehend aus Addukten aus aliphatischen, (cyclo)aliphatischen, cycloaliphatischen Diisocyanaten und Polyolen der folgenden Zusammensetzung: 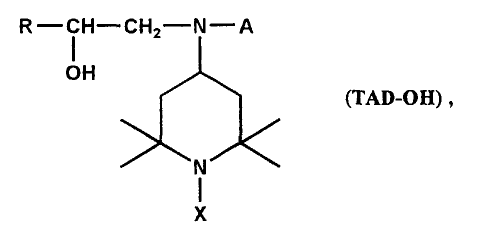 wobei
- A:: H; 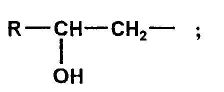
- R:: H, Alkylrest mit 1 - 20 C-Atomen, Cycloalkylrest, substituierter Cycloalkylrest;
- X:: H, CH₃ 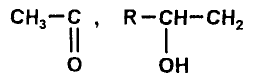 ,
bedeuten, und die pro OH-Äquivalent TAD-OH 2 NCO-Äquivalente Diisocyanat enthalten.

Weiterer Gegenstand der Erfindung ist ein Verfahren zur Herstellung von Lackpolyisocyanaten mit einem eingebauten HALS-Stabilisator, welches dadurch gekennzeichnet ist, daß das Diisocyanat mit dem TAD-OH im Molverhältnis 5 - 20 : 1 umgesetzt wird, und nach erfolgter Umsetzung das nicht umgesetzte Diisocyanat durch eine Kurzwegdestillation bei 120 - 180 °C/0,1 mbar vom Reaktionsprodukt abgetrennt wird.

Die Herstellung der erfindungsgemäßen Lackpolyisocyanate erfolgt in zwei Stufen, wobei in der 1. Stufe das Diisocyanat mit dem TAD-OH umgesetzt wird. Hierbei wird zu dem bei 80 - 120 °C vorgelegten Diisocyanat das TAD-OH unter intensivem Rühren innerhalb von 2 - 3 h unter Stickstoffund Ausschluß von Feuchtigkeit so zudosiert, daß auf 1 mol TAD-OH 5 - 20 mol, vorzugsweise 10 mol Diisocyanat, zur Reaktion kommen. Nach Beendigung der TAD-OH-Zugabe wird so lange bei ca. 100°C weitererhitzt, bis pro eingesetztem OH-Äquivalent 1 NCO-Äquivalent umgesetzt ist. Nach erfolgter Umsetzung wird das nicht umgesetzte Diisocyanat bei 120 - 180 °C/0,1 mbar durch eine Kurzwegdestillation abgetrennt. Der Monomergehalt der so hergestellten erfindungsgemäßen Verbindungen liegt bei < 0,5 %.

Als Ausgangsverbindungen, die zur Umsetzung mit dem TAD-OH eingesetzt werden können, eignen sich aliphatische, (cyclo)aliphatische, cycloaliphatische und araliphatische Diisocyanate, wie sie z. B. in Houben-Weyl, Methoden der Organischen Chemie, Band 14/2, S. 61 - 70 und dem Artikel von W. Siefken in Justus Liebigs Annalen der Chemie 562, S. 75 - 136 beschrieben werden, wie Tetramethylendiisocyanat, Hexamethylendiisocyanat, 2-Methylpentamethylendiisocyanat, 2.2.4(2.4.4)-Trimethylhexamethylendiisocyanat, Cyclohexan-1.3- und - 1.4-diisocyanat, 3-Isocyanatomethyl-3.5.5-trimethylcyclohexylisocyanat (Isophorondiisocyanat; IPDI), 4.4'-Diisocyanatodicyclohexylmethan, Hexahydroxylylendiisocyanat-1.4 und - 1.3.

Als "TAD-Polyole" bzw. TAD-Monoalkohole eignen sich z. B. 4-(2-Hydroxyethyl)-amino-2.2.6.6-tetramethylpiperidin, 4-(2-Hydroxypropyl)-amino-2.2.6.6-tetramethylpiperidin, 4-Bis(2-hydroxyethyl)-amino-2.2.6.6-tetramethylpiperidin, 4-Bis(2-hydroxypropyl)-amino-2.2.6.6-tetramethylpiperidin, 4-Bis(2-hydroxybutyl)-amino-2.2.6.6-tetramethylpiperidin, 4-Bis(2-hydroxyethyl)-amino-1.2.2.6.6-pentamethylpiperidin, 4-Bis(2-hydroxyethyl)-amino-1-(2-hydroxyethyl)-2.2.6.6-tetramethylpiperidin. Im Prinzip kommen für das erfindungsgemäße Verfahren alle Aminoalkohole, Diole und Triole in Frage, die sich nach folgenden Reaktionsgleichungen in bekannter Weise herstellen lassen: 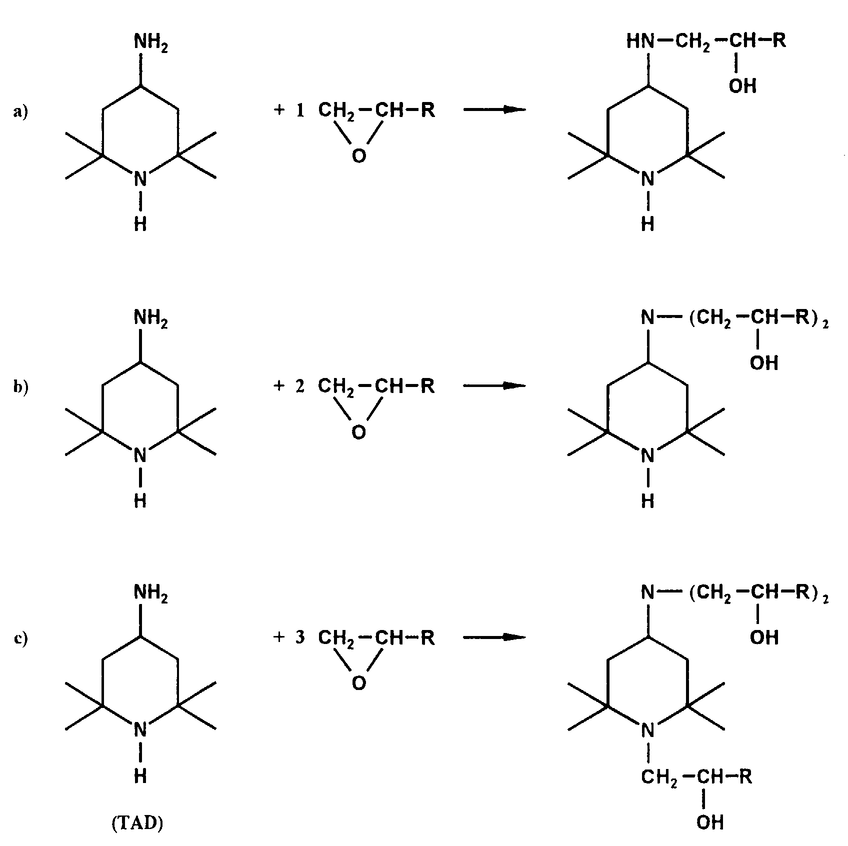 R: H, Alkylrest mit 1 - 20 C-Atomen, Cycloalkylrest, substituierter Cycloalkylrest.

Als besonders geeignet haben sich als Diol das Reaktionsprodukt aus 1 mol TAD und 2 mol Ethylenoxid und als Triol das Reaktionsprodukt aus 1 mol TAD und 3 mol Ethylenoxid erwiesen.

Die Herstellung der TAD-OH (Di- und Triole) erfolgt in einer 1-Stufenreaktion aus den Komponenten (TAD + Monoepoxid) bei 100 - 130 °C. Das 4-Amino-2.2.6.6-tetramethylpiperidin (TAD) wird nach dem in der DE-OS 28 07 172 beschriebenen Verfahren durch aminierende Hydrierung des aus Aceton und NH₃ hergestellten Triacetonamins hergestellt.

Bei den erfindungsgemäßen Verbindungen handelt es sich im allgemeinen um Verbindungen des Molekulargewichtsbereiches 600 - 1 500. Die Verfahrensprodukte sind hochviskos bis fest. Bei den festen Produkten variiert der Schmelzpunkt in einem Bereich von 40 - 120 °C. Die bevorzugten erfindungsgemäßen Verbindungen sind darüber hinaus durch einen Gehalt an sterisch gehinderten Aminogruppen von 1 - 2 mmol/g, einen Gehalt an basischem Stickstoff von 2 - 4 mmol/g und einen Gehalt an freien NCO-Gruppen (berechnet als NCO) von 10 - 15 % charakterisiert. Die erfindungsgemäßen Verbindungen sind in den lacküblichen Lösemitteln wie Toluol, Xylol (auch technische Gemische), Tetrahydronaphthalin; Ketone wie Methylisobutylketon, Diisobutylketon, Isophoron und Ester wie n-Hexylacetat, n-Butylglykolacetat, Methoxypropylacetat gut löslich. Des weiteren sind sie mit den zur Härtung eingesetzten OH-Gruppen enthaltenden Polymeren ausgezeichnet verträglich.

Die Verfahrensprodukte eignen sich als Härter für Zerewitinoff-aktive Wasserstoffatome aufweisende höherfunktionelle thermoplastische Verbindungen. Das bedeutendste Anwendungsgebiet für derartige Systeme ist ihre Verwendung als permanent stabilisierte Bindemittel für 2K-PUR-Lacke.

Gegenstand der vorliegenden Erfindung sind demnach auch bei Raumtemperatur bis 180 °C härtbare 2K-PUR-Lacke auf Basis der erfindungsgemäßen Diisocyanataddukte und OH-Gruppen aufweisende Polymere der folgenden Zusammensetzung:
a) 100 Gew.-T. OH-Gruppen haltige Polymere,
b) 10 - 90 Gew.-T. erfindungsgemäßes Polyisocyanat,
c) 0 - 160 Gew.-T. Pigmente,
d) 0 - 200 Gew.-T. übliche Füllstoffe,
e) 0 - 5 Gew.-T. Katalysator,
f) 0 ,5 - 5 Gew.-T. Verlaufsmittel.

Der Bestandteil a) kann im Prinzip jedes mehr als zwei OH-Gruppen enthaltende Polymer sein, das einen Glasumwandlungspunkt zwischen 20 und - 25 °C aufweist. Hierbei handelt es sich um Polyetherpolyole, Polyesteramidpolyole, Polyurethanpolyole, hydroxylierte Acrylatharze usw., deren OH-Gruppen für die Vernetzung mit den erfindungsgemäßen Diisocyanataddukten bestimmt sind. Besonders bevorzugt sind unter den zahlreichen Möglichkeiten für Hydroxylgruppen tragende Polymere im Rahmen der Erfindung Polyesterpolyole. Solche Polyesterpolyole weisen eine OH-Zahl von 25 - 300 mg KOH/g, bevorzugt 30 - 150 mg KOH/g, auf. Ihre Herstellung gehört zum Stand der Technik und wird z. B. in der DE-OS 30 30 554 beschrieben.

Um die Geliergeschwindigkeit der lösungsmittelhaltigen 2K-PUR-Lacke zu erhöhen, kann man Katalysatoren zusetzen. Als Katalysatoren verwendet man Organozinnverbindungen wie Dibutylzinndilaurat (DBTL), Sn(II)-octoat, Dibutylzinnmaleat usw. Die Menge an zugesetztem Katalysator beträgt 0,03 - 0,5 Gew.-T. auf 100 Gew.-T. des OH-Gruppen enthaltenden Polyesters. Die erfindungsgemäßen 2K-PUR-Lacke werden vorteilhaft dort eingesetzt, wo hohe Beständigkeiten in der Außenbewitterung, etwa bei der Glanzhaltung pigmentierter Lacke oder der Rißbeständigkeit von Klarlacken auf Metallic-base-coats, gefordert sind.

Ein weiterer Gegenstand der vorliegenden Erfindung ist die Verwendung der erfindungsgemäßen Verbindungen zur Herstellung von 2K-PUR-Lacken in Kombination mit den bekannten NCO-haltigen, monomerfreien Lackpolyisocyanaten, wie z. B. isocyanuratgruppenhaltige Polyisocyanate (VESTANAT® T 1890; DESMODUR® N 3300), biuretgruppenhaltige Polyisocyanate (DESMODUR® N 3200), isocyanurat- und allophanatgruppenhaltige Polyisocyanate (EP 0 524 500, 0 524 501, 0 535 483), urethangruppenhaltige Polyisocyanate (Trimethylolpropanaddukt des Isophorondiisocyanats sowie des Hexamethylendiisocyanats). Bei diesen erfindungsgemäßen 2K-PUR-Lacken besteht die NCO-Komponente aus 10 - 90 Gew.-%, vorzugsweise 20 - 50 Gew.-%, der erfindungsgemäßen Lackpolyisocyanate. Die mit solchen Kombinationshärtern hergestellten 2K-PUR-Lacke zeichnen sich durch extrem gute Beständigkeiten bei Temperaturbelastung sowie Außenbewitterung aus.

Ein weiteres großes Einsatzgebiet der erfindungsgemäßen Verbindungen ist der Zusatz zu feuchtigkeitshärtenden lösungsmittelhaltigen 1K-PUR-Lacken. Sie werden den feuchtigkeitshärtenden 1K-PUR-Lacken in Mengen von 5 - 60 Gew.-%, bevorzugt 20 - 40 Gew.-% (bezogen auf die NCO-Komponente des 1-K-Lackes), zugesetzt und bewirken eine deutliche Erhöhung der Beständigkeit bei der Außenbewitterung.

### Experimenteller Teil

### A Herstellung der TAD-Polyole

### A 1 Herstellung von 4-Bis(2-hydroxyethyl)-amino-2.2.6.6-tetramethylpiperidin (TAD-2 EO)

780 Gew.-T. 4-Amino-2.2.6.6-tetramethylpiperidin (TAD) wurden in einem 2-l-Stahlautoklaven unter Stickstoffatmosphäre bei 100 - 120 °C langsam mit 484 Gew.-T Ethylenoxid (EO) versetzt. Der Druck stieg dabei maximal auf 7 bar. Nach beendeter Reaktion wurde entspannt und fraktioniert destilliert.

Man erhielt 203 Gew.-T. 4-(2-Hydroxyethyl)-amino-2.2.6.6-tetramethyl-piperidin mit einem Siedepunkt von 120 - 145 °C/0,27 mbar und als Hauptfraktion 798 Gew.-T. 4-Bis(2-hydroxyethyl)-amino-2.2.6.6-tetramethylpiperidin mit einem Siedepunkt von 170 - 173°C/0,20 mbar.

### A 2 Herstellung von 4-Bis(2-hydroxypropyl)-amino-2.2.6.6-tetramethylpiperidin (TAD-2 PO)

In Analogie zur Herstellung von TAD-2 EO wurde TAD-2 PO hergestellt, wobei anstelle von Ethylenoxid Propylenoxid eingesetzt wurde. Das danach erhaltene TAD-2 PO hatte einen Schmelzpunkt von 97 - 102 °C und eine Basenzahl von 410 mg KOH/g.

### A 3 Herstellung von 4-Bis(2-hydroxyethyl)-amino-1-hydroxyethyl-2.2.6.6-tetramethylpiperidin (TAD-3 EO)

780 Gew.-T. TAD und 700 Gew.-T. Ethylenoxid wurden in Analogie zum Beispiel 1 umgesetzt. Das danach erhaltene TAD-3 EO hatte eine Basenzahl von 385 mg KOH/g.

### A 4 Herstellung von 4-(2-Hydroxypropyl)-amino-2.2.6.6-tetramethylpiperidin (TAD-1 PO)

312 Gew.-T. TAD und 116 Gew.-T. Propylenoxid wurden bei 40 °C so lange erhitzt, bis kein PO mehr nachgewiesen werden konnte. Das Reaktionsprodukt wurde ohne weitere Reinigung zur Kettenverlängerung eingesetzt. Die Basenzahl lag bei 538 mg KOH/g.

### B Herstellung der erfindungsgemäßen Verbindungen

### Allgemeine Herstellungsvorschrift

Zu dem auf 80 °C erhitzten Diisocyanat (10 mol) wurde das TAD-OH (1 mol) portionsweise zugegeben und nach Beendigung der Zugabe noch so lange bei 80 °C weitererhitzt, bis pro eingesetztem OH-Äquivalent 1 NCO-Äquivalent umgesetzt wurde. Der Reaktionsverlauf wurde durch Bestimmung des NCO-Gehaltes verfolgt. Nach beendeter Umsetzung wurde das nicht umgesetzte Diisocyanat durch eine Kurzwegdestillation bei 120 - 180 °C vom Reaktionsprodukt abgetrennt.

Die in der nachfolgenden Tabelle aufgeführten Produkte wurden nach dieser Vorschrift hergestellt.

**Tabelle 1**

| **Erfindungsgemäße Verbindungen - Zusammensetzung und Kenndaten** | | | | | | |
|---|---|---|---|---|---|---|
| Beispiel-Nr. | Zusammensetzung | | NCO_{gef.} [%] | NCO_{ber.} [%] | Monomer [%] | NH₂ [mmol/g] |
| | 1 mol TAD-OH | mol Diisocyanat | | | | |
| B 1 | TAD-2 EO | 2 IPDI | 11,1 | 12,2 | 0,2 | 3,2 |
| B 2 | TAD-2 EO | 2 HDI | 13,0 | 14,5 | 0,1 | 3,8 |
| B 3 | TAD-3 EO | 3 IPDI | 11,6 | 13,2 | 0,5 | 2,3 |
| B 4 | TAD-3 EO | 3 HMDI | 9,6 | 11,7 | 0,4 | 2,1 |
| B 5 | TAD-3 EO | 3 TMDI | 11,4 | 13,7 | 0,4 | 2,3 |
| B 6 | TAD-2 PO | 2 IPDI | 10,3 | 11,7 | 0,2 | 3,0 |
| B 7 | TAD-2 PO | 2 DI 51 | 12,1 | 13,7 | < 0,1 | 3,6 |
| B 8 | TAD-1 PO | 2 IPDI | 11,2 | 12,7 | 0,2 | 1,7 |
| HDI: Hexamethylendiisocyanat HMDI: 4,4'-Diisocyanatodicyclohexylmethan DI 51: 2-Methylpentamethylendiisocyanat TMDI: 2.2.4(2.4.4)-Trimethylhexamethylendiisocyanat | | | | | | |

### C Polyester

In Tabelle 2 sind die für die Formulierung der lösemittelhaltigen PUR-Lacksysteme verwendeten hydroxylgruppenhaltigen Polyester der Hüls AG zusammengefaßt:

**Tabelle 2**

| Beispiel C | Bezeichnung | OH-Zahl/100% [mg KOH/g] | Säurezahl/100 % [mg KOH/g] | Wassergehalt [%] | Lösemittelgemisch/Festkörper f. 2-K-L [%] |
|---|---|---|---|---|---|
| 1 | Oxyester Z 1439 | ≈ 130 | < 2 | < 0,1 | 50 in B/X = 3 : 1 |
| 2 | Oxyester Z 1326 | ≈ 125 | < 2 | < 0,1 | 50 in B/X = 1 : 2 |

### D Herstellung der 2K-PUR-Lacke

### Allgemeine Herstellungsvorschrift

### Komponente A

Die Oxyesterlösung wurde, falls erforderlich, mit weiterem Lösemittelgemisch - entsprechend der Oxyesterlösung - versetzt und anschließend mit Weißpigment (TiO₂) und dem in der PUR-Chemie üblichen Verlaufsmittel und Katalysatoren in der Kugelrührwerksmühle abgerieben.

### 2K-Lack

Zur Komponente A wurde in einem zweiten Schritt die berechnete Menge Komponente B - der Vernetzer - unter Rühren hinzugegeben. Nach einer Reifezeit von 10 bis 15 Minuten wurde die Lacklösung auf entfettete, gegebenenfalls vorbehandelte Stahl- oder Aluminiumbleche appliziert und in einem Laborumlufttrockenschrank gehärtet zwischen 80 und 170 °C.

### D 1 Pigmentierte 2K-Lacke auf Basis der erfindungsgemäßen Verbindungen

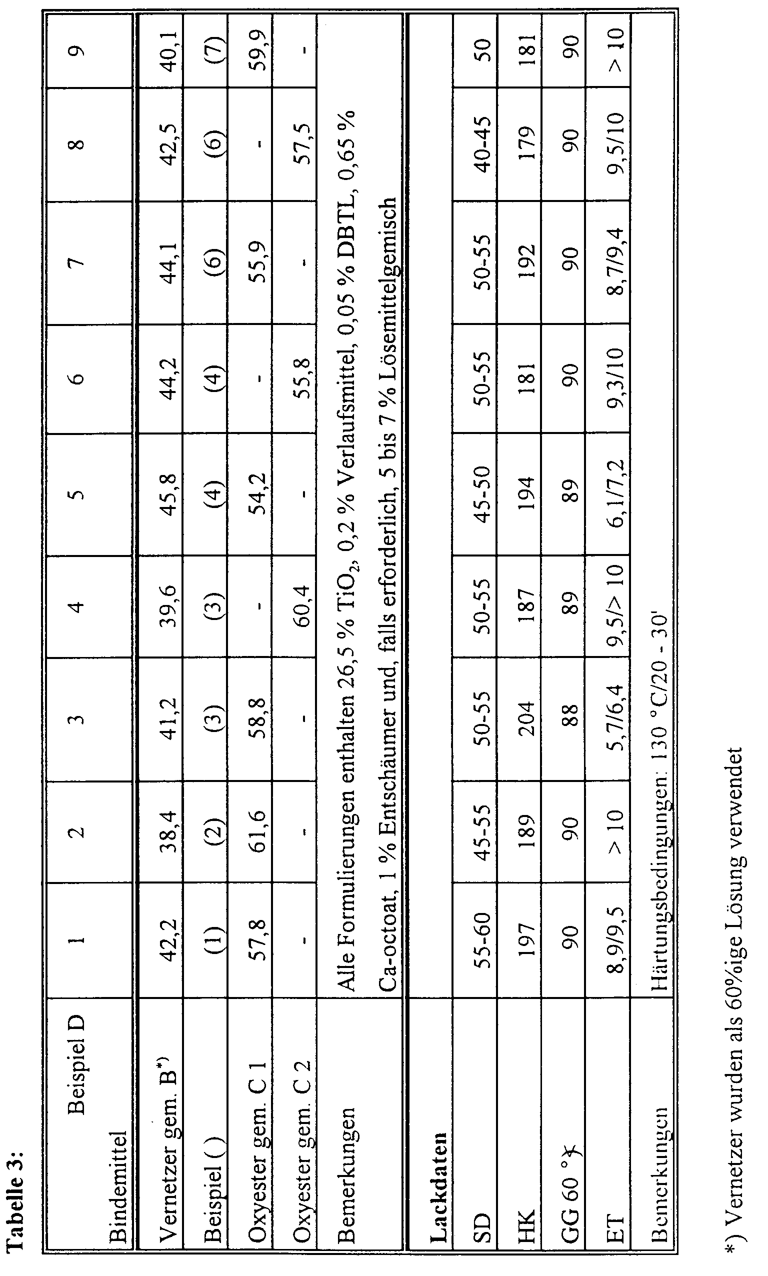

### D 2 Pigmentierte 2K-PUR-Lacke auf Basis von Mischungen der erfindungsgemäßen Verbindungen mit in der PUR-Lack-Industrie üblichen Polyisocyanaten wie VESTANAT T 1890 (Hüls AG) und DESMODUR N 3300 (Bayer AG)

Beide Vernetzer wurden als 60%ige Lösung verwendet:
a) VESTANAT T 1890: NCO-Gehalt: 17,2 ± 0,3 %
b) DESMODUR N 3300: NCO-Gehalt: 21,8 ± 0,3 %

Zur Herstellung der 2K-PUR-Lacke wurden die Vernetzerlösungen im gewünschten Verhältnis gemischt und anschließend mit der berechneten Oxyestermenge gemäß der allgemeinen Herstellungsvorschrift umgesetzt.

**Tabelle 4**

| Beispiel D 2 | Zusammensetzung [Gew.-%] | | NCO-Gehalt [Gew.-%] |
|---|---|---|---|
| | Vernetzer gem. B | Vernetzer gem. D 2 | |
| 1 | 10 (3) | 90 (a) | 9,97 |
| 2 | 20 (3) | 80 (a) | 9,63 |
| 3 | 50 (3) | 50 (a) | 8,63 |
| 4 | 90 (3) | 10 (a) | 7,29 |
| 5 | 50 (3) | 50 (b) | 9,93 |
| 6 | 80 (3) | 20 (b) | 8,15 |
| 7 | 50 (4) | 50 (b) | 9,33 |
| 8 | 50 (7) | 50 (a) | 10,08 |

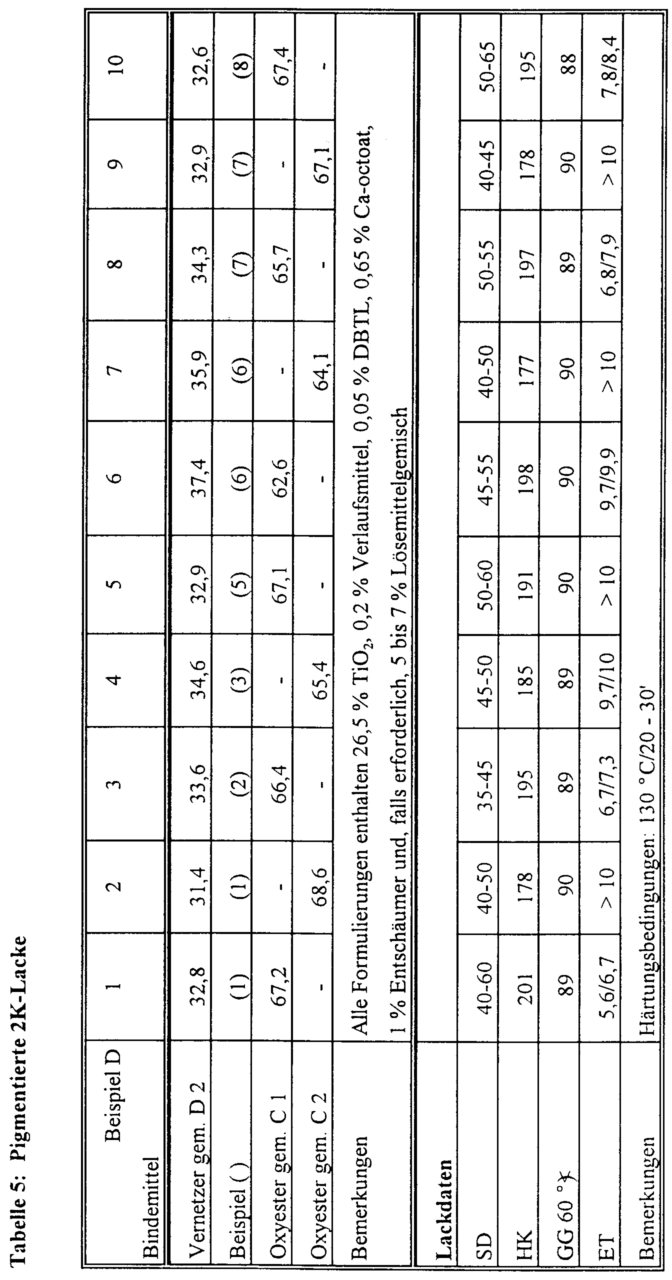

## Patentansprüche

1. Lackpolyisocyanate mit einem eingebauten HALS-Stabilisator, bestehend aus Addukten von aliphatischen, (cyclo)aliphatischen, cycloaliphatischen Diisocyanaten und Polyolen der folgenden Zusammensetzung: 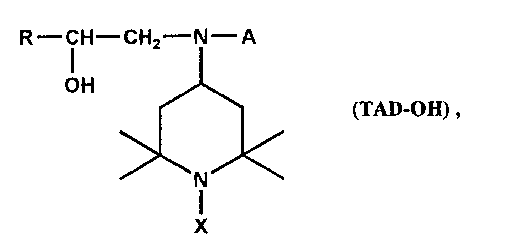 wobei
A: H; 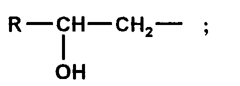
R: H, Alkylrest mit 1 - 20 C-Atomen, Cycloalkylrest, substituierter Cycloalkylrest;
X: H, CH₃ , 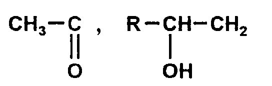
bedeuten, und die pro OH-Äquivalent TAD-OH 2 NCO-Äquivalente Diisocyanat enthalten.

2. Lackpolyisocyanate gemäß Anspruch 1,
dadurch gekennzeichnet,
daß sie Isophorondiisocyanat, Hexamethylendiisocyanat, 4,4'-Diisocyanatodicyclohexylmethan und/oder 2-Methylpentamethylendiisocyanat als Diisocyanatkomponente enthalten.

3. Lackpolyisocyanate gemäß den Ansprüchen 1 bis 2,
dadurch gekennzeichnet,
daß sie als Polyolkomponente folgende Verbindung enthalten:

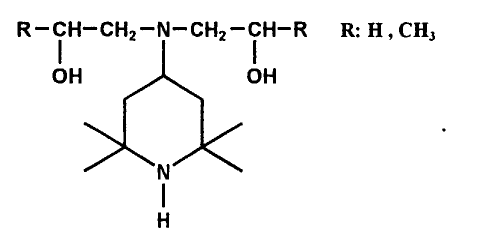

4. Lackpolyisocyanate gemäß den Ansprüchen 1 bis 2,
dadurch gekennzeichnet,
daß sie als Polyolkomponente folgende Verbindung enthalten:

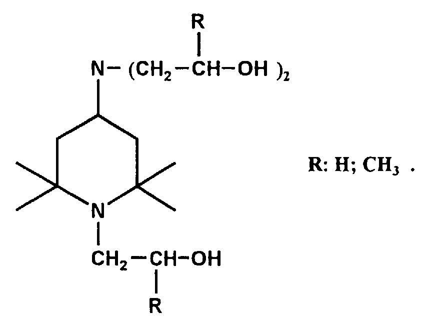

5. Lackpolyisocyanate gemäß den Ansprüchen 1 bis 2,
dadurch gekennzeichnet,
daß sie als Polyolkomponente folgende Verbindung enthalten:

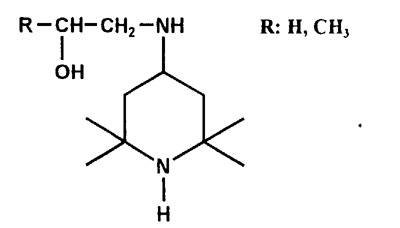

6. Verfahren zur Herstellung von Lackpolyisocyanaten mit einem eingebauten HALS-Stabilisator, bestehend aus Addukten von aliphatischen, (cyclo)aliphatischen, cycloaliphatischen Diisocyanaten und Polyolen der folgenden Zusammensetzung: 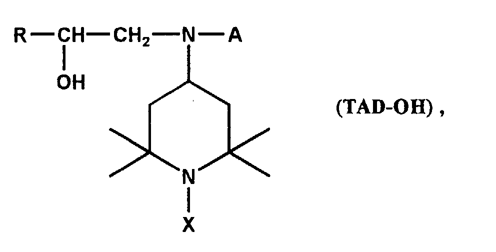 wobei
A: H; 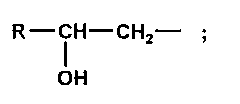
R: H, Alkylrest mit 1 - 20 C-Atomen, Cycloalkylrest, substituierter Cycloalkylrest;
X: H, CH₃ , 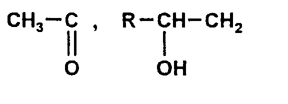
bedeuten, und die pro OH-Äquivalent TAD-OH zwei NCO-Äquivalente Diisocyanat enthalten, wobei das Diisocyanat mit dem TAD-OH im Molverhältnis 5 - 20 : 1 umgesetzt wird, und nach erfolgter Umsetzung das nicht umgesetzte Diisocyanat durch eine Kurzwegdestillation bei 120 - 180 °C/0,1 mbar vom Reaktionsprodukt abgetrennt wird.

7. Verwendung von Lackpolyisocyanaten gemäß den Ansptuchen 1 bis 5 in Kombination mit hydroxylgruppenhaltigen Polymeren zur Herstellung von transparenten und pigmentierten 2K-PUR-Lacken.

8. Transparente und pigmentierte 2K-PUR-Lacke der folgenden Zusammensetzung:
a) 100 Gew.-T. OH-Gruppen haltige Polymere,
b) 10 - 90 Gew.-T. erfindungsgemäßes Polyisocyanat,
c) 0 - 160 Gew.-T. Pigmente,
d) 0 - 200 Gew.-T. übliche Füllstoffe,
e) 0 - 5 Gew.-T. Katalysator,
f) 0 ,5 - 5 Gew.-T. Verlaufsmittel.

9. 2K-PUR-Lacke nach Anspruch 8,
dadurch gekennzeichnet,
daß ein OH/NCO-Verhältnis von 1 : 0,5 - 1,2, vorzugsweise 1 : 0,8 - 1,1, und insbesondere 1 : 1 zugrunde liegt.

10. 2K-PUR-Lacke gemäß den Ansprüchen 8 bis 9,
dadurch gekennzeichnet,
daß sie Katalysatoren in einer Konzentration von 0,03 - 0,5 Gew.-% (bezogen auf die Polyolkomponente) enthalten.

11. 2K-PUR-Lacke gemäß den Ansprüchen 8 bis 10,
dadurch gekennzeichnet,
daß als hydroxylgruppenhaltige Polymere Polyester mit einer Funktionalität > 2 und einer OH-Zahl von 25 - 300 mg KOH/g, bevorzugt 30 - 150 mg KOH/g, eingesetzt werden.

12. 2K-PUR-Lacke gemäß den Ansprüchen 8 bis 11,
dadurch gekennzeichnet,
daß die NCO-Komponente aus 90 - 10 Gew.-Teilen Lackpolyisocyanaten und 10 - 90 Gew.-Teilen eines isocyanuratgruppenhaltigen aliphatischen Polyisocyanats besteht.

13. 2K-PUR-Lacke gemäß den Ansprüchen 8 bis 11,
dadurch gekennzeichnet,
daß die NCO-Komponente aus 90 - 10 Gew.-Teilen Lackpolyisocyanaten und 10 - 90 Gew.-Teilen eines isocyanuratgruppenhaltigen (cyclo)aliphatischen Polyisocyanurats besteht.

14. 2K-PUR-Lacke gemäß den Ansprüchen 8 bis 11,
dadurch gekennzeichnet,
daß die NCO-Komponente aus 90 - 10 Gew.-Teilen Lackpolyisocyanaten und 10 - 90 Gew.-Teilen eines biuretgruppenhaltigen aliphatischen Polyisocyanats besteht.

15. Feuchtigkeitshärtende 1K-PUR-Lacke,
dadurch gekennzeichnet,
daß sie 5 - 60 Gew.-%, bezogen auf die NCO-Komponete des 1K-PUR-Lackes, Lackpolyisocyanate mit einem eingebauten HALS-Stabilisator, bestehend aus Addukten von aliphatischen, (cyclo)aliphatischen, cycloaliphatischen Diisocyanaten und Polyolen der folgenden Zusammensetzung: 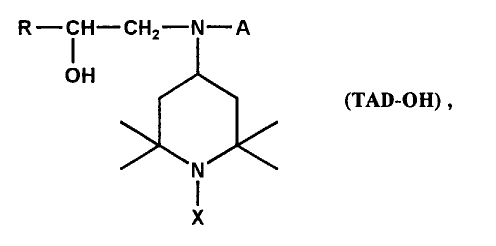 wobei
A: H; 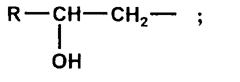
R: H, Alkylrest mit 1 - 20 C-Atomen, Cycloalkylrest, substituierter Cycloalkylrest;
X: H, CH₃ 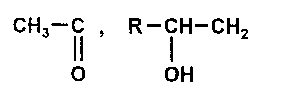 ,
bedeuten, und die pro OH-Äquivalent TAD-OH 2 NCO-Äquivalente Diisocyanat enthalten, aufweisen.
